# FASCICULE DE BREVET EUROPEEN

(11) **EP 1 677 017 B1**
(45) Date de publication et mention de la délivrance du brevet: **13.02.2008**
(21) Numéro de dépôt: 05292589.8
(22) Date de dépôt: 06.12.2005
(51) Int. Cl.: F16C 37/00, B29C 49/36

(54) **Dispositif de refroidissement d'une couronne d'orientation, couronne d'orientation comprenant un tel dispositif et machine, notamment de soufflage, comprenant un tel dispositif et une telle couronne**
Kühlvorrichtung für Wälzlager, Wälzlager mit einer solchen Vorrichtung, und Maschine, insbesondere für Blasformung, mit einer solchen Vorrichtung und einem solchen Lager
Cooling device for rolling bearing, rolling bearing comprising such a device, and apparatus, especially for blow-moulding, comprising such a device and such a bearing

(30) Priorité: 29.12.2004 FR 0414047
(43) Date de publication de la demande: 05.07.2006
(73) Titulaire: SIDEL PARTICIPATIONS, 76930 Octeville-sur-Mer (FR)
(72) Inventeur: Linglet, Stéphane c/o Sidel, 76930 Octeville-sur-Mer (FR); Langlois, Pierre-François c/o Sidel, 76930 Octeville-sur-Mer (FR); Rousseau, Nicolas c/o Sidel, 76930 Octeville-sur-Mer (FR)
(74) Mandataire: Gorrée, Jean-Michel

(56) Documents cités:
- DE-A1- 1 750 578
- GB-A- 2 136 886
- US-A- 4 323 286
- US-A- 5 433 525
- US-A- 5 863 571
- PATENT ABSTRACTS OF JAPAN vol. 2003, no. 12, 5 décembre 2003 (2003-12-05) & JP 2004 092878 A (MITSUBISHI HEAVY IND LTD), 25 mars 2004 (2004-03-25)

## Description

L'invention se rapporte au domaine technique des machines de soufflage de récipients, telles les machines d'injection soufflage.

Une telle machine de fabrication de récipients par soufflage, selon le préambule de la revendication 1 est connue du document US 5 863 571 A.

L'invention trouve un intérêt particulier pour des machines tournantes du type ci-dessus présenté comprenant un carrousel porté par une couronne d'orientation.

Une couronne d'orientation comporte en général deux bagues pouvant être mises en rotation relative l'une par rapport à l'autre, chaque bague comportant un chemin de roulement, et la couronne comporte par ailleurs un dispositif de rotation constitué d'organes ou corps roulants (tels que des billes ou roulements à billes) intercalé entre les deux chemins de roulement et un dispositif de fixation des éléments constitutifs de la couronne pour en empêcher la désolidarisation tout en permettant la rotation relative des deux bagues.

Les machines de soufflage comprennent usuellement une telle couronne d'orientation. En effet, ces machines de soufflage sont conventionnellement munies de plusieurs unités de moulage portées par un carrousel qui est rotatif autour d'un axe sensiblement vertical. Pour ce faire, une bague est reliée au châssis de la machine et le carrousel est porté par l'autre bague. Ainsi, le carrousel peut tourner relativement au châssis. La bague reliée au châssis est dite bague fixe, et l'autre bague est dite bague tournante. La bague tournante et donc le carrousel sont entraînés en rotation par un moteur, en général non directement, mais par l'intermédiaire de mécanismes à pignons et/ou à courroies.

La demanderesse a découvert qu'un échauffement relativement modeste et localisé de la couronne de machines de soufflage se produisait lors de l'utilisation courante de ces machines.

Pour une couronne de 1800 mm de diamètre tournant à 30 tours par minute, la masse tournante étant de 18 tonnes, la demanderesse a observé un échauffement localisé de l'ordre de 25 degrés.

Ce phénomène était resté jusqu'ici inaperçu, sans doute en partie parce que la couronne d'orientation est placée au coeur d'une machine très compacte, cette machine comprenant de très nombreux organes se déplaçant à grande vitesse lorsque la machine est en fonctionnement.

Ce phénomène est sans doute aussi resté inaperçu parce qu'il est de très faible ampleur, un échauffement de l'ordre de 25 degrés, localisé, ayant toutes chances de ne pas être noté au coeur d'une machine comprenant de nombreux organes dissipant des calories, le tout dans un environnement industriel.

La demanderesse a émis l'hypothèse qu'un tel échauffement localisé et modeste de la couronne d'orientation pourrait cependant avoir des conséquences significatives, cet échauffement localisé entraînant une très légère dilatation de la couronne pouvant induire une légère variation des jeux de fonctionnement, et une usure prématurée de certaines pièces.

La demanderesse, sur la base de cette découverte d'un échauffement localisé et modeste, et supposant une corrélation entre cette montée modeste en température et certaines variations des jeux de fonctionnement de la machine, s'est attachée à pallier ce problème technique entrevu.

La demanderesse a ainsi envisagé des moyens qui permettent de contrôler cet échauffement localisé, pour le réduire voire l'annuler, afin de réduire les phénomènes indésirables, tels que des jeux de fonctionnement apparaissant au niveau de certaines pièces des machines, ces moyens pouvant être mis en place sur machines existantes. Plusieurs approches initiales n'ont pas donné satisfaction.

Une première approche a consisté à pourvoir la bague mobile d'ailettes. Une seconde a consisté à envisager de pulvériser de l'huile à l'aide d'air sur le dispositif roulant : cette approche s'est avérée non compatible avec les machines de soufflages de récipients, car elle était susceptible de provoquer une pollution, non désirée, de la machine, pollution pouvant se répercuter sur ou dans les récipients, ce qui est inacceptable.

L'invention a pour objet de remédier aux inconvénients des machines de soufflage connues.

A ce fin, l'invention est décrite dans la revendication 1.

Dans une réalisation, un circuit de passage de fluide caloporteur comprend au moins deux étages. Il est ainsi possible de refroidir la bague de la couronne à laquelle il est associé sur toute sa hauteur, certaines bagues d'orientation étant épaisses.

De préférence, le circuit de passage de fluide caloporteur est sensiblement annulaire, de façon à épouser au mieux la bague contre laquelle il est plaqué.

Avantageusement, chaque étage comprend des éléments arqués de conduit, chaque élément arqué d'un étage donné étant, à une première de ses deux extrémités, en liaison de fluide caloporteur avec un autre élément arqué du même étage, et étant en liaison de fluide caloporteur, par son autre extrémité, avec un moyen d'injection ou un moyen d'aspiration de fluide caloporteur. Il est ainsi possible d'équiper des couronnes ayant des diamètres différents, en employant des éléments arqués de longueur assez faible, le cas échéant en cintrant ces éléments à la main ou à l'aide d'un outillage portatif, pour les adapter au rayon de courbure de la bague contre laquelle ils doivent être plaqués.

Avantageusement, la circulation du fluide caloporteur est effectuée suivant deux sens inverses d'un étage donné du circuit à l'étage qui lui est contigu. Cette circulation à contre courant permet une meilleure homogénéité dans le transfert de chaleur.

Avantageusement, le circuit de passage de fluide caloporteur est formé par des éléments arqués de conduit sensiblement identiques, reliés entre eux et reliés à des moyens d'aspiration et d'injection de fluide caloporteur. Le dispositif peut ainsi être fabriqué en série, par exemple par profilage/cintrage de tubes en alliage métallique tel qu'alliage d'aluminium.

Afin de faciliter encore le transfert thermique par conduction et d'éviter la présence de films d'air entre le conduit de refroidissement et la couronne d'orientation, un produit pâteux est avantageusement disposé entre les éléments arqués de conduit et cette couronne d'orientation contre laquelle ces éléments sont plaqués. Ce produit pâteux, de faible résistance thermique, pourra par exemple être appliqué au pistolet avant bridage des éléments arqués de conduit contre la couronne d'orientation ; alternativement, un composant double face pourra être utilisé.

Avantageusement, le fluide caloporteur est de l'eau. L'eau est compatible avec un environnement alimentaire, tel que celui de certaines machines de fabrication ou de convoyage d'articles polymères, notamment machines de fabrication de bouteilles par soufflage, et ne pose pas de problème de pollution en cas de fuite accidentelle ; en outre, l'effet caloporteur de l'eau est suffisant pour compenser les températures atteintes par les couronnes d'orientation des machines de soufflage ; enfin, les machines de soufflage de récipients comportent généralement des circuits d'amenée d'eau, par exemple pour refroidir les moules, auxquels le circuit de refroidissement de la couronne peut être connecté.

Dans une réalisation avantageuse d'une machine de soufflage équipée d'une couronne, avec une bague dite bague fixe reliée au châssis de la machine et un carrousel porté par l'autre bague, dite tournante, le circuit de passage de fluide caloporteur comprend des éléments de conduit arqués plaqués contre la bague fixe de ladite couronne. Il n'est ainsi pas nécessaire de mettre en place un joint tournant pour amener le fluide caloporteur dans le circuit de passage de ce fluide.

D'autres objets et avantages de l'invention apparaîtront au cours de la description suivante de modes de réalisation, description qui va être effectuée en se référant aux dessins annexés dans lesquels:
- la figure 1 est une vue en perspective d'un mode de mise en oeuvre de l'invention, la figure 1 montrant en outre des éléments d'un châssis de machine, châssis sur lequel est montée une couronne d'orientation ;
- la figure 2 est une vue illustrant un agencement des conduits de circulation de fluide caloporteur tels que mis en oeuvre dans la réalisation de la figure 1, de même qu'un agencement d'une commande de régulation ;
- la figure 3 est une vue en plan correspondant à la figure 1, cette figure 3 montrant notamment la disposition de moyens de mesure de température à proximité des corps roulants de la couronne d'orientation ;
- la figure 4 est une vue en coupe de la couronne d'orientation représentée en figure 3 ;
- la figure 5 est une vue de dessus d'un élément du circuit de fluide caloporteur tel que mis en oeuvre en figure 2
- la figure 6 est une vue de détail d'une partie extrême de l'élément représenté en figure 5.

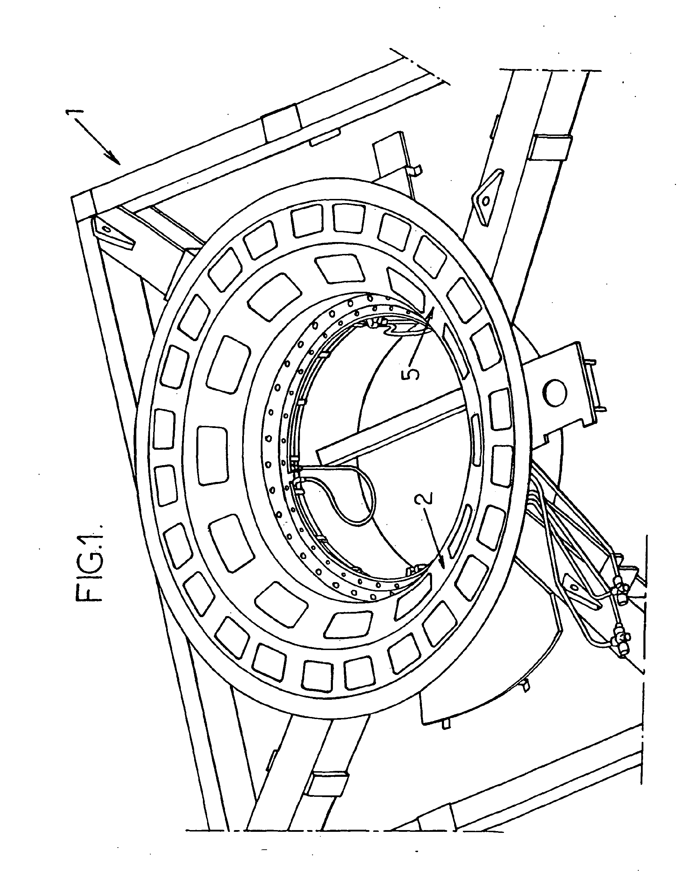

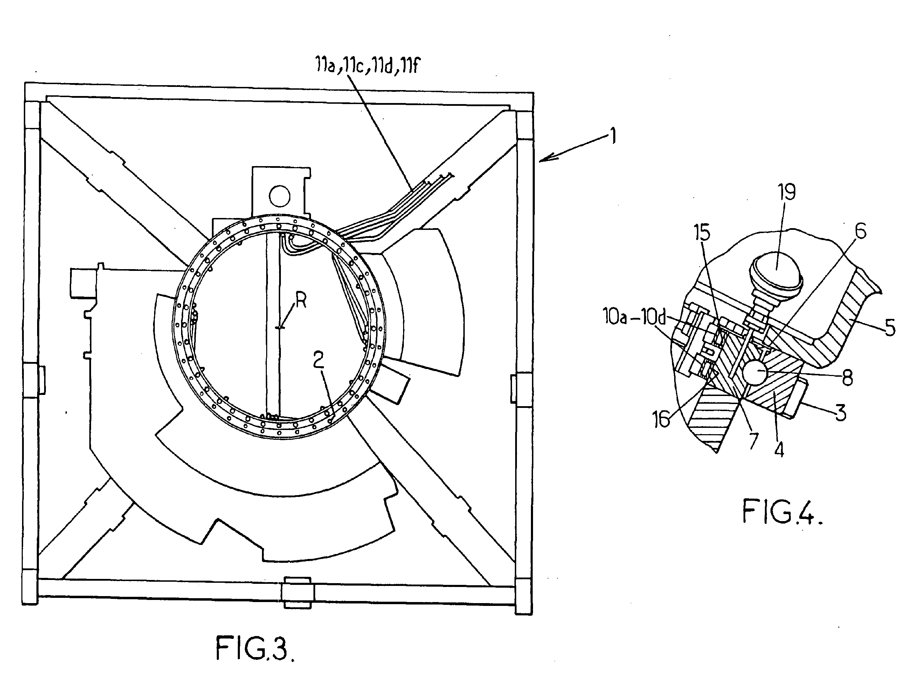

On se reporte tout d'abord aux figures 1 et 4.

Le châssis 1 d'une machine de soufflage de récipients, est partiellement représenté sur cette figure 1 sous la forme d'un assemblage mécano soudé de poutres en caisson et de poutres en H ou en I.

Sur ce châssis 1 est monté une couronne 2 d'orientation.

Cette couronne 2 d'orientation comprend une denture extérieure 3 (voir figure 4) montée sur une bague 4 tournante, ici la bague externe de la couronne. Sur cette bague 4 tournante est montée, par exemple au travers de trous de fixation borgnes ou passants, lisses ou taraudés, une masse 5 tournante en forme de coupelle ajourée. Sur cette coupelle sont fixés divers organes de la machine, non représentés, l'ensemble formant un carrousel. A titre d'illustration, sur une machine de la demanderesse, la masse tournante 5 équipée desdits organes (moules, pinces...) peut avoir un poids de l'ordre de dix huit tonnes pour une vitesse de rotation du carrousel, et donc de la bague 4 tournante, de l'ordre de trente tours par minute.

Des joints 6 sont placés entre la bague 4 externe et une bague 7 de la couronne 2, laquelle bague est fixée au châssis 1 de la machine. Ces joints 6 peuvent être réalisés en élastomère de nitrile.

Comme illustré sur la figure 4, un dispositif 8 de roulement constitué de corps roulants, tels que par exemple des billes ou des galets en acier à roulement, est intercalé entre les deux bagues, de façon à permettre la rotation relative d'une bague par rapport à l'autre. Plus précisément, les corps roulants sont disposés entre deux zones respectives de chaque bague constituant un chemin de roulement de profil adapté à celui des corps roulants. Ainsi, dans le cas ou les corps roulants sont des billes (figure 4), les chemins de roulement sont en forme de gorges annulaires de section radiale en arc de cercle en vis-à-vis.

Le graissage de la couronne 2 peut, le cas échéant, être réalisé par le biais de trous de graissage radiaux et bouchons de remplissage, non représentés.

De façon connue, les bagues 4, 7 peuvent être réalisées en aciers au carbone, en aciers inoxydables, en aciers ou alliages à durcissement structural ou en aciers spéciaux pour trempe sous atmosphère contrôlée, en fonction notamment des contraintes en service.

Les chemins de roulement font l'objet d'une trempe par induction ou par flamme, et un traitement superficiel des dentures peut également être réalisé par exemple par cémentation ou nitruration ionique, en fonction des efforts appliqués.

Par exemple sur une machine de soufflage, la couronne 2 d'orientation est soumise à des charges axiales, dont la direction est parallèle à l'axe de rotation R de la couronne 2, et aussi à des charges radiales, des moments de renversement, et des couples de pivotement. La couronne 2 d'orientation transmet ces efforts vers le châssis 1 fixe.

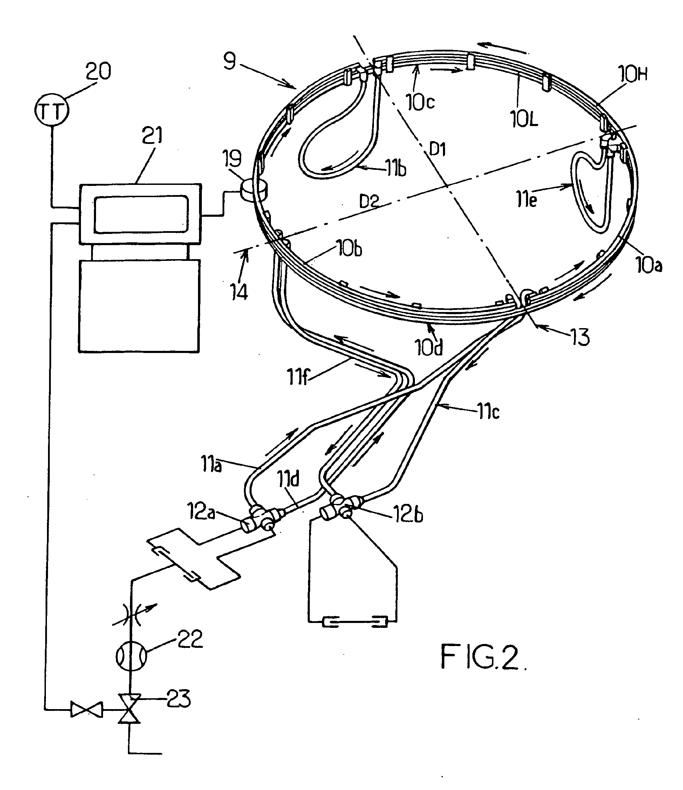

L'on se rapporte maintenant plus particulièrement aux figures 2 à 6.

Conformément à l'invention, la couronne 2 est pourvue d'un circuit 9 de passage d'un fluide caloporteur qui en permet un refroidissement contrôlé.

Dans le mode de réalisation représenté, ce circuit 9 de passage de fluide caloporteur est placé contre et plaqué sur la surface interne de la bague 7 interne, constituant la bague fixe, de la couronne 2. Comme on le lira plus loin, ceci présente l'avantage de ne pas nécessiter l'emploi de raccords tournants de fluides entre le circuit 9 et un circuit d'amenée de fluide à la machine. Dans d'autres modes de réalisation, non représentés, il est tout à fait envisageable que ce circuit soit placé contre et plaqué sur la bague 4 tournante (ici la bague interne) de la couronne 2 d'orientation ; il est encore envisageable de pourvoir chaque bague d'un circuit de passage de fluide caloporteur.

Comme illustré sur la figure 2, de préférence, le circuit 9 de passage de fluide caloporteur est réparti sur la couronne 2 en plusieurs étages de passage, ici deux étages 10H et 10L, qui comprennent chacun au moins un élément 10a, 10b, 10c, 10d de conduit arqués dans lequel circule un fluide caloporteur véhiculé par des conduits 11a à 11f de liaison.

Plus précisément, dans la réalisation représentée en figure 2, le circuit 9 de passage de fluide caloporteur comprend deux étages 10H, 10L superposés constitués chacun d'au moins deux éléments (éléments 10a, 10b pour le premier étage 10H ; éléments 10c, 10d pour le second étage 10L) arqués sensiblement identiques reliés par des conduits de liaison.

Les extrémités des éléments 10a, 10b arqués d'un premier étage 10H, supérieur, sont placées suivant une section de premier diamètre D1.

Les extrémités des éléments 10c, 10d arqués du deuxième étage 10L, inférieur, sont placées suivant une section de second diamètre D2.

Cet agencement permet de bien refroidir une bague présentant, sur sa hauteur, plusieurs sections de diamètres différents.

Bien entendu, le nombre d'étages superposés pourrait être augmenté, en fonction du profil de la bague ; pour une bague ne présentant pas de variation de diamètre, un seul étage pourrait être utilisé, qui permettrait de refroidir toute la hauteur de la bague.

En outre, l'emploi d'au moins deux éléments en série par étage, bien que non nécessaire, facilite l'installation du dispositif de refroidissement sur des machines déjà existantes ; en outre le transport en est facilité : le diamètre de la couronne d'orientation d'une machine de soufflage peut dépasser quelques mètres.

Ainsi qu'il apparaît en figure 2, le fluide caloporteur, partant d'une première connexion 12a telle qu'un raccord de piquage sur un circuit (non représenté) de fluide existant dans la machine, via un conduit 11a de liaison, passe dans un premier élément 10a arqué de l'étage supérieur 10H, un autre conduit 11b de liaison, un deuxième élément 10b arqué de l'étage supérieur 10H pour être évacué vers une seconde connexion 12b telle qu'un autre raccord de piquage sur un circuit de fluide via un conduit 11c de liaison.

Ainsi qu'il apparaît en figure 2, le fluide caloporteur s'écoule, dans les éléments 10a, 10b dans un premier sens, ici le sens inverse des aiguilles d'une montre.

Par ailleurs, partant de la première connexion 12a, le fluide caloporteur passe, via un autre conduit 11d de liaison, dans un premier élément 10c de l'étage inférieur 10L, un conduit 11e de liaison, un deuxième élément 10d arqué de l'étage inférieur 10B, pour être évacué vers la seconde connexion 12b, via un conduit 11f.

Ainsi qu'il apparaît sur la figure 2, le fluide caloporteur s'écoule, dans les éléments 10c, 10d, dans un second sens, ici le sens des aiguilles d'une montre.

L'entrée et la sortie de fluide caloporteur dans les deux éléments 10a, 10b de l'étage supérieur 10H sont effectuées en une zone 13 décalée de 90° environ par rapport à la zone 14 d'entrée et de sortie du fluide dans les éléments 10c, 10d de l'étage inférieur.

Par ces dispositions le refroidissement de la couronne est homogénéisé.

Il est entendu que les termes « inférieur », « supérieur » ne sont employés ici qu'afin de clarté et que le fluide caloporteur pourra, dans une autre mise en oeuvre, s'écouler dans des sens inverses que ceux décrits ci-dessus, le fluide arrivant par la seconde connexion 12b et ressortant par la première connexion 12a.

Ainsi qu'il apparaît en figure 4, les éléments 10a à 10d ont, dans une mise en oeuvre, une section sensiblement rectangulaire, une grande face 15 de ces sections étant en appui contre la bague 7 interne, constituant ici la bague fixe de la couronne 2.

Un joint thermique 16 est avantageusement placé entre cette face 15 et la bague 7 interne, par exemple sous la forme d'une pâte commercialisée par la société Bergquist sous la dénomination GapPad® VO Ultra soft. Cette pâte présente, selon son fournisseur, une capacité calorifique de l'ordre de un Joule par gramme Kelvin (ASTM C351), et une conductivité thermique de l'ordre de un Watt par mètre kelvin (ASTM D5470).

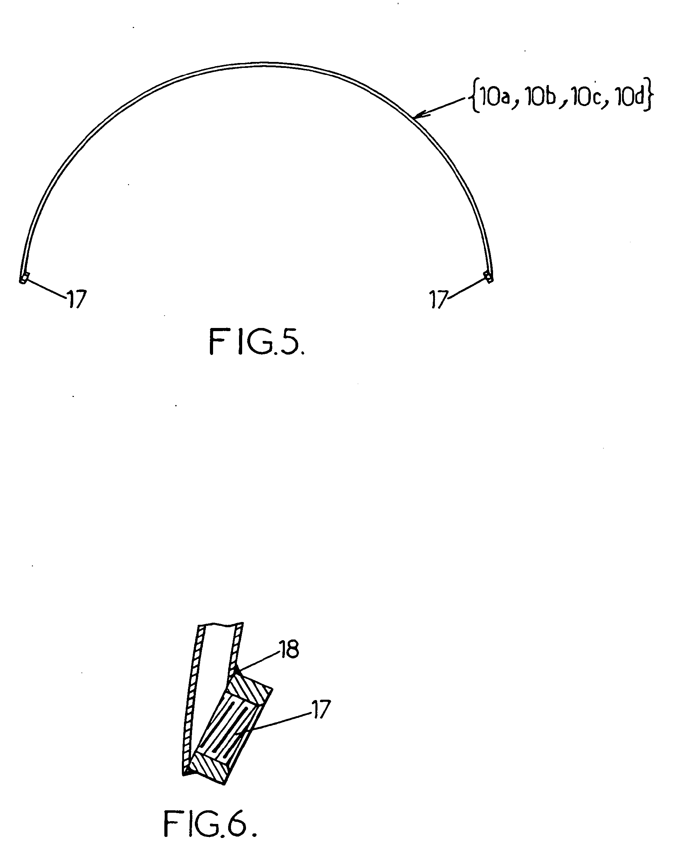

Ainsi qu'il apparaît en figures 5 et 6, les éléments 10a, 10b, 10c, 10d arqués (dont un seul est visible sur la figure 5), par exemple tubes en alliage d'aluminium de 30 mm par 15 mm épaisseur 2 mm, sont pourvus d'orifices 17 de branchement, par exemple rapportés par soudage en 18, pour le branchement des conduits 11a à 11f représentés en figure 2.

La régulation de la température du fluide circulant dans le dispositif peut être effectuée à l'aide des éléments mis en évidence ci-après.

Des moyens de mesure 19 de température de la couronne 2, tels qu'une sonde ou un capteur, sont placés à proximité des corps roulants, comme il apparaît sur la figure 4. Ces moyens de mesure 19 et des moyens de mesure 20 de la température ambiante, tels qu'une autre sonde ou un autre capteur, sont reliés à un contrôleur 21, également connecté à un débitmètre 22 d'une électrovanne 23 placée sur le circuit de retour du fluide caloporteur, comme schématisé sur la figure 2.

La demanderesse a constaté qu'une régulation de type tout ou rien en débit de fluide caloporteur donnait satisfaction pour le refroidissement d'une couronne d'orientation de machine de soufflage, dans laquelle la masse tournante à 30 tours par minute était de 18 tonnes, pour un diamètre de couronne de l'ordre de 1800 mm.

Avec de tels paramètres, des temps d'ouverture de vanne de cinq minutes séparés par des temps de fermeture de dix minutes sont satisfaisants, pour un débit de fluide caloporteur de l'ordre de 0.5 à 1.5 mètre cube à l'heure, le fluide caloporteur étant de l'eau à environ sept degrés Celsius.

## Revendications

1. Machine de fabrication de récipients, par soufflage, comprenant une couronne (2) d'orientation et un circuit de passage d'un fluide caloporteur, ladite couronne (2) d'orientation portant un carrousel d'une machine de soufflage de récipients, ladite couronne comportant deux bagues (4, 7) pouvant être mises en rotation l'une par rapport à l'autre, chaque bague comportant un chemin de roulement, la couronne comportant par ailleurs un dispositif (8) de roulement constitué de corps roulants intercalé entre les deux chemins de roulement, **caractérisé en ce qu**'il est prévu un dispositif de refroidissement comprenant au moins un circuit (9) de refroidissement plaqué contre une des deux bagues (4,7) de ladite couronne (2) et en ce qu'il est prévu des moyens de mesure (19) de la température de la couronne (2) et des moyens de contrôle (21) du flux de fluide caloporteur en fonction de la différence entre cette température de la couronne (2) et une valeur de référence, le circuit (9) de refroidissement de la couronne (2) étant connecté au circuit de fluide caloporteur de la machine.

2. Machine selon la revendication 1, **caractérisée en ce qu'**elle comporte une couronne, pourvue d'une bague (7) dite bague fixe, liée au châssis de la machine, et une bague (4) portant un carrousel, et **en ce que** le dispositif de refroidissement de la couronne (2) comprend des secteurs (10a, 10b, 10c, 10d) de conduit arqués plaqués contre la bague (7) fixe de ladite couronne (2).

3. Machine selon la revendication 1 ou 2, **caractérisée en ce que** le circuit (9) de refroidissement est sensiblement annulaire et comprend des éléments (10a, 10b, 10c, 10d) de conduit arqués plaqués contre une bague (7) de ladite couronne (2).

4. Machine selon l'une des revendications 1 à 3, **caractérisée en ce que** le circuit (9) de refroidissement comprend au moins un étage (10H ; 10L) avec au moins un élément (10a, 10b; 10c, 10d) de conduit arqué.

5. Machine selon la revendication 4, **caractérisée en ce qu**'un étage (10H ; 10L) comprend au moins un élément de conduit relié par une première de ses deux extrémités, à une connexion (12a) d'arrivée de fluide caloporteur, et par son autre extrémité à une connexion (12b) de sortie de fluide caloporteur.

6. Machine selon la revendication 5, **caractérisée en ce qu**'un étage (10H; 10L) comprend au moins deux éléments (10a, 10b; 10c, 10d) de conduit arqués, reliés entre eux par des conduits (11b, 11e) de liaison, un élément (10a; 10c) étant reliée par une première connexion (12a) à un circuit d'arrivée de fluide existant dans la machine, une extrémité d'un autre élément (10b; 10d) étant reliée par une seconde connexion (12b) sur un circuit de sortie de fluide existant dans la machine.

7. Machine selon l'une quelconque des revendications 4 à 6, **caractérisée en ce que** le dispositif de refroidissement comporte au moins deux étages (10H; 10L) et la circulation du fluide caloporteur est effectuée suivant deux sens inverses d'un étage donné du circuit à l'étage qui lui est contigu.

8. Machine selon l'une quelconque des revendications 1 à 7, **caractérisée en ce que** le circuit (9) de refroidissement est formé par des éléments arqués de conduit sensiblement identiques, reliés entre eux et reliés à des moyens d'arrivée et de sortie de fluide caloporteur.

9. Machine selon la revendication 8, **caractérisée en ce qu'**un joint thermique (16) est disposé entre les éléments arqués de conduit et la couronne d'orientation contre laquelle ces éléments sont plaqués.

10. Machine selon l'une quelconque des revendications précédentes, **caractérisée en ce que** le fluide caloporteur est de l'eau.

11. Machine selon l'une quelconque des revendications précédentes, **caractérisée en ce que** lesdits moyens de mesure (19) de la température de la couronne sont constitués par une sonde placée à proximité des corps roulants du dispositif (8) de roulement de la couronne (2).

## Claims

1. A machine for fabricating receptacles by blow-molding, the machine including a rotary mount (2) and a circuit for passing a cooling fluid, said rotary mount (2) carrying a carousel of a receptacle blow-molding machine, said mount comprising two rings (4, 7) capable of rotating relative to each other, each ring having a raceway, the mount further comprising a bearing device (8) constituted by rolling bodies interposed between the two raceways, the machine being **characterized in that** a cooling device is provided comprising at least one cooling circuit (9) pressed against one of the two rings (4, 7) of said mount (2), and **in that** there are provided measurement means (19) for measuring the temperature of the mount (2), and control means (21) for controlling the flow of cooling fluid as a function of the difference between the temperature of the mount (2) and a reference temperature, the cooling circuit (9) of the mount (2) being connected to the cooling fluid circuit of the machine.

2. A machine according to claim 1, **characterized in that** it comprises a mount provided with a stationary ring (7) connected to the structure of the machine and a ring (4) carrying a carousel, and **in that** the cooling device of the mount (2) comprises arcuate duct sectors (10a, 10b, 10c, 10d) pressed against the stationary ring (7) of said mount (2).

3. A machine according to either claim 1 or claim 2, **characterized in that** the cooling circuit (9) is substantially annular and is made up of arcuate duct elements (10a, 10b, 10c, 10d) pressed against a ring (7) of said mount (2).

4. A machine according to any one of claims 1 to 3, **characterized in that** the cooling circuit (9) comprises at least one stage (10H; 10L) having at least one arcuate duct element (10a, 10b; 10c, 10d).

5. A machine according to claim 4, **characterized in that** a stage (10H; 10L) comprises at least one duct element connected via a first of its two ends to a cooling fluid inlet connection (12a), and via its other end to a cooling fluid outlet connection (12b).

6. A machine according to claim 5, **characterized in that** a stage (10H; 10L) comprises at least two arcuate duct elements (10a, 10b; 10c, 10d) interconnected by connection ducts (11b, 11e), one element (10a; 10c) being connected via a first connection (12a) to a fluid inlet circuit existing in the machine, one end of another element (10b; 10d) being connected via a second connection (12b) to a fluid outlet circuit existing in the machine.

7. A machine according to any one of claims 4 to 6, **characterized in that** the cooling device comprises at least two stages (10H; 10L), and the cooling fluid is caused to circulate in two opposite directions from a given stage of the circuit to the stage which is contiguous therewith.

8. A machine according to any one of claims 1 to 7, **characterized in that** the cooling circuit (9) is formed by substantially identical arcuate duct elements interconnected and connected to cooling fluid inlet means and outlet means.

9. A machine according to claim 8, **characterized in that** a thermal gasket (16) is disposed between the arcuate duct elements and the ring against which said elements are pressed.

10. A machine according to any one of precedent claims, **characterized in that** the cooling fluid is water.

11. A machine according to any one of precedent claims, **characterized in that** said means (19) for measuring the temperature of the mount are constituted by a probe placed close to the rolling bodies of the bearing device (8) of the mount (2).

## Patentansprüche

1. Maschine zur Herstellung von Behältern durch Blasformung, umfassend ein Wälzlager (2) und einen Kreislauf zum Durchlass einer Kühlflüssigkeit, wobei das Wälzlager (2) eine Kreisbahn einer Maschine zur Blasformung von Behältern aufweist, wobei das Lager zwei Ringe (4, 7) aufweist, die im Verhältnis zueinander in Drehung versetzt werden können, wobei jeder Ring eine Führungsschiene aufweist, wobei das Lager ferner eine Rollvorrichtung (8) aufweist, die aus Rollkörpern besteht, die zwischen den beiden Führungsschienen eingesetzt ist, **dadurch gekennzeichnet, dass** eine Kühlvorrichtung vorgesehen ist, die mindestens einen Kühlkreislauf (9) aufweist, der an einen der beiden Ringe (4,7) des Lagers (2) gepresst ist, und dass Mittel (19) zur Messung der Temperatur des Lagers (2) und Mittel (21) zum Überprüfen des Flusses der Kühlflüssigkeit in Abhängigkeit von der Differenz zwischen dieser Temperatur des Lagers (2) und einem Referenzwert vorgesehen sind, wobei der Kühlkreislauf (9) des Lagers (2) mit dem Kreislauf der Kühlflüssigkeit der Maschine verbunden ist.

2. Maschine nach Anspruch 1, **dadurch gekennzeichnet, dass** sie ein Lager aufweist, das mit einem Ring (7), dem so genannten Standring, versehen ist, der mit dem Rahmen der Maschine verbunden ist, und einem Ring (4), der eine Kreisbahn aufweist, und dass die Kühlvorrichtung des Lagers (2) bogenförmige Führungsbereiche (10a, 10b, 10c, 10d) aufweist, die an den Standring (7) des Lagers (2) gepresst sind.

3. Maschine nach Anspruch 1 oder 2, **dadurch gekennzeichnet, dass** der Kühlkreislauf (9) im Wesentlichen ringförmig ist und bogenförmige Führungselemente (10a, 10b, 10c, 10d) aufweist, die gegen einen Ring (7) des Lagers (2) gepresst sind.

4. Maschine nach einem der Ansprüche 1 bis 3, **dadurch gekennzeichnet, dass** der Kühlkreislauf (9) mindestens eine Stufe (10H; 10L) mit mindestens einem bogenförmigen Führungselement (10a, 10b; 10c 10d) aufweist.

5. Maschine nach Anspruch 4, **dadurch gekennzeichnet, dass** eine Stufe (10H; 10L) mindestens ein Führungselement aufweist, das durch ein erstes seiner beiden Enden mit einem Zulaufanschluss (12a) der Kühlflüssigkeit und durch sein anderes Ende mit einem Auslaufanschluss (12b) der Kühlflüssigkeit verbunden ist.

6. Maschine nach Anspruch 5, **dadurch gekennzeichnet, dass** eine Stufe (10H; 10L) mindestens zwei bogenförmige Führungselemente (10a, 10b; 10c, 10d) aufweist, die untereinander durch Verbindungsleitungen (11b, 11e) verbunden sind, wobei ein Element (10a; 10c), das durch einen ersten Anschluss (12a) mit einem Zulaufkreislauf der in der Maschine vorhandenen Flüssigkeit verbunden ist, wobei ein Ende eines anderen Elements (10b; 10d) über einen zweiten Anschluss (12b) mit einem Auslaufkreislauf der in der Maschine vorhandenen Flüssigkeit verbunden ist.

7. Maschine nach einem der Ansprüche 4 bis 6, **dadurch gekennzeichnet, dass** die Kühlvorrichtung mindestens zwei Stufen (10H; 10L) aufweist und dass die Zirkulation der Kühlflüssigkeit in zwei entgegengesetzten Richtungen einer bestimmten Stufe des Kreislaufs in der Stufe, der an ihn angrenzt, erfolgt.

8. Maschine nach einem der Ansprüche 1 bis 7, **dadurch gekennzeichnet, dass** der Kühlkreislauf (9) durch bogenförmige Führungselemente gebildet ist, die im Wesentlichen identisch sind, die untereinander verbunden sind und mit Einlauf- und Auslaufmitteln des Kühlflüssigkeit verbunden sind.

9. Maschine nach Anspruch 8, **dadurch gekennzeichnet, dass** eine Wärmedichtung (16) zwischen den bogenförmigen Führungselementen und dem Wälzlager, an welches diese Elemente gepresst sind, angeordnet ist.

10. Maschine nach einem der vorhergehenden Ansprüche, **dadurch gekennzeichnet, dass** die Kühlflüssigkeit Wasser ist.

11. Maschine nach einem der vorhergehenden Ansprüche, **dadurch gekennzeichnet, dass** die Mittel (19) zur Messung der Temperatur des Lagers aus einer Sonde gebildet sind, die in der Nähe der Rollkörper des Rollvorrichtung (8) des Lagers (2) angeordnet ist.
